# EUROPÄISCHE PATENTSCHRIFT

(11) **EP 0 561 975 B1**
(45) Veröffentlichungstag und Bekanntmachung des Hinweises auf die Patenterteilung: **15.02.1995**
(21) Anmeldenummer: 92901977.6
(22) Anmeldetag: 13.12.1991
(51) Int. Cl.: B23K 15/08

(54) **VERFAHREN ZUM WARTUNGSARMEN BETRIEB EINER VORRICHTUNG ZUR HERSTELLUNG EINER OBERFLÄCHENSTRUKTUR UND VORRICHTUNG**
PROCESS FOR THE LOW-MAINTENANCE OPERATION OF A DEVICE FOR PRODUCING A SURFACE STRUCTURE, AND DEVICE
PROCEDE POUR L'EXPLOITATION, AVEC UN ENTRETIEN REDUIT, D'UN DISPOSITIF POUR LA REALISATION D'UNE STRUCTURE DE SURFACE, ET DISPOSITIF

(30) Priorität: 15.12.1990 DE 4040201
(43) Veröffentlichungstag der Anmeldung: 29.09.1993
(73) Patentinhaber: SIDMAR N.V., B-9042 Gent (BE)
(72) Erfinder: SERMUND, Gerald, D-2300 Kiel 1 (DE)
(74) Vertreter: Van Malderen, Michel
(86) Internationale Anmeldenummer: DE9100968
(87) Internationale Veröffentlichungsnummer: WO9210327

(56) Entgegenhaltungen:
- US-A- 4 452 647
- PATENT ABSTRACTS OF JAPAN, Vol. 13, No.95 (C-573)(3443) 6 March 1989, & JP-A-63 274 779 (MITSUBISHI KEAVY IND LTD) 11 November 1988.
- Electromechanical Society, San-Francisco, 12-17 May 1974, abstract no: 215 ELECTRON BEAM MACHINING-THE PROCESS AND ITS APPLICATIONS D.F. von Dobeneck

## Beschreibung

Die Erfindung betrifft ein Verfahren gemäß dem Oberbegriff des Anspruchs I zum wartungsarmen Betrieb einer Vorrichtung zum Erzeugen von Oberflächenstrukturen auf einer Walze mittels eines Elektronenstrahles, bei dem der Elektronenstrahl zur Veränderung seiner Bündelung von einer Fokussierung beaufschlagt wird und bei dem die Vorrichtung aus einer Vakuumkammer zur Aufnahme der Walze sowie aus einer den Elektronenstrahl erzeugenden Strahleinrichtung besteht, welche in einer die Strahleinrichtung von der Vakummkammer trennenden Wandung einen Durchlaß für den Elektronenstrahl aufweist.

Die Erfindung betrifft darüber hinaus eine Vorrichtung gemäß dem Oberbegriff des Anspruchs II zur Durchführung des Verfahrens, die aus einer Strahleinrichtung mit einem den Elektronenstrahl erzeugenden Strahlgenerator, einer Brennweiteneinstellung sowie mit einer Fokussierung und aus einer die Walze aufnehmenden Vakuumkammer besteht, wobei die Strahleinrichtung in einer diese von der Vakuumkammer trennen den Wandung einen Durchlaß für den Elektronenstrahl aufweist.

Zur Herstellung derartiger Walzen, die beispielsweise als Texturwalzen oder Dressurwalzen ausgebildet sind und insbesondere zur Erzeugung einer Oberflächenstruktur auf Stahlblechen verwendet werden, sind in der Vergangenheit unterschiedliche Verfahren angewendet worden. Zum einen erfolgte eine Partikelbeaufschlagung mit Stahlkies entsprechend einem Schrotschuß, zum anderen wurden Vertiefungen auf der Walze durch Elektroerosion oder durch Bearbeiten mit einem Laser erzeugt. Die Elektroerosion und die Partikelbeaufschlagung mit Stahlkies führen jedoch zu scharfkantig begrenzten Ausnehmungen oder Vertiefungen, deren Kantenbereiche zum Abbrechen und somit zur Staubentwicklung neigen. Bei der Elektroerosion und der Laserbeaufschlagung tritt darüber hinaus eine Oxidation des Walzenmetalles und damit eine Aschenbildung auf. Die Anzahl der auf der Walzenoberfläche zu erzeugenden Vertiefungen ist bei einer Bearbeitung mit Lasern durch die Trägheit der verwendeten Spiegel begrenzt.

Bei der Herstellung von Druckzylindern für den Tiefdruck werden mit Hilfe des Elektronenstrahles auf der Walzenoberfläche Vertiefungen oder Näpfchen hergestellt, die beim späteren Druck die Druckfarben aufnehmen. Bei der Erzeugung der Vertiefungen gegebenenfalls entstehende Kraterwälle werden nach Beendigung der Zylindergravur abgetragen.

Aus der DE-AS 28 40 702 sind ein Verfahren und eine Vorrichtung zur Qualitätsverbesserung von Stahlfeinblechen bekannt. In dieser Druckschrift ist angegeben, daß auf der Walzenoberfläche eine Oberflächenstruktur mit Hilfe einer intermittierenden Energiestrahlung entlang einer spiralförmigen Bahn erfolgt. Insbesondere wird angegeben, daß als Energiestrahlung ein Laserstrahl verwendet werden kann. Es wird jedoch auch darauf hingewiesen, daß grundsätzlich ein Elektronenstrahl verwendet werden kann. Konkrete Hinweise zum Ablauf eines Verfahrens unter Verwendung eines Elektronenstrahles oder zum Aufbau einer dieser Verfahren anwendenden Vorrichtung werden jedoch nicht gegeben.

Aus der EP-A-0 119 182 ist es bekannt, eine Walzenoberfläche mit Hilfe einer Laserstrahlung oder einer Elektronenstrahlung zu beaufschlagen. Mit Hilfe dieser Strahlung wird eine spiralförmige Bahn auf der Walzenoberfläche erzeugt. Insbesondere ist hier daran gedacht, in den Bereich der Strahlenbeaufschlagung ein Gas, beispielsweise Sauerstoff, zu blasen. Durch den Sauerstoffzutritt erfolgt im Bereich der Strahlenbeaufschlagung eine Oxidierung des Walzenmetalles. Es wird dadurch die Ausbildung eines Kraterwalles, der eine von der Strahlung erzeugte Ausnehmung umschließt, weitgehend vermieden, da das verdampfende oder in flüssigem Zustand aus der Ausnehmung herausgeschleuderte Material sehr schnell mit dem Sauerstoff reagiert.

Aus der EP-B-0 108 376 ist es bekannt, die Gravur von Druckzylindern mit Hilfe einer Elektronenstrahlbeaufschlagung durchzuführen und eine Nachgravur relativ zu einer bereits erfolgten Gravur durch einen speziellen Einphasvorgang zu gewährleisten. Die örtliche Anordnung der mit Hilfe der in dieser Druckschrift beschriebenen Vorrichtung erzeugten Ausnehmungen auf dem Druckzylinder ist durch das zu erzeugende Druckbild vorgegeben.

Die bei der Herstellung der Ausnehmungen auf der Walzenoberfläche aus dem Walzenmaterial herausgelösten Partikel werden aufgrund der im Bereich der Elektronenstrahlbeaufschlagung herrschenden hohen Temperaturen mindestens zu einem Teil verdampft. Dieser Dampf schlägt sich nach Abkühlung zu einem überwiegenden Teil in der die Walze aufnehmenden Vakuumkammer nieder. In der Regel herrscht im Bereich der Strahleinrichtung ein stärker ausgeprägtes Vakuum als im Bereich der Vakuumkammer. Dies führt dazu, daß verdampfte Materialpartikel in den Bereich der Strahleinrichtung vordringen können.

Der überwiegende Anteil dieser eindringenden Materialpartikel schlägt sich im Bereich eines Durchlasses nieder, der innerhalb einer die Strahleinrichtung von der Vakuumkammer trennenden Wandung angeordnet ist und eine Überleitung des Elektronenstrahles aus der Strahleinrichtung in die Vakuumkammer ermöglicht. Insbesondere bei einem Zusammenwirken mit einer die Wandung im Bereich des Durchlasses temperierenden Kühlung ist mit einem Zuwachsen des Durchlasses zu rechnen. Bei der Gravur einer Stahlwalze werden einige Kubikzentimeter Metall verdampft und durch diese erhebliche Anzahl von Materialpartikeln wächst der Bereich des Durchlasses bereits innerhalb eines Zeitraumes von etwa dreißig bis sechzig Minuten zu. Bereits vor dem vollständigen Zuwachsen des Durchlasses kann die genaue Positionierung des Elektronenstrahles beeinträchtigt werden. Darüber hinaus ist bei einem permanenten Auftreffen des Elektronenstrahles auf die zuwachsenden Bereiche mit einem erheblichen lokalen Temperaturanstieg zu rechnen, der zu einer Beschädigung der Vorrichtung führen kann. Zur Vermeidung dieser Nachteile war deshalb in der Vergangenheit ein häufiges Auswechseln eines im Bereich des Durchlasses angeordneten Einsatzes, bzw. eine häufige Reinigung des Durchlasses erforderlich. Diese Wartungsarbeiten erfordern einen nicht unerheblichen Arbeitsaufwand und sind mit Produktionsunterbrechungen verbunden.

Aufgabe der vorliegenden Erfindung ist es daher, ein z.B. aus EP-B-108 376 bekanntes Verfahren der einleitend genannten Art so zu verbessern, daß zum Erreichen einer langen Betriebsdauer ein die Funktionsfähigkeit beeinträchtigendes Anwachsen von verdampftem Material im Bereich des Durchlasses vermieden wird.

Diese Aufgabe wird in Verbindung mit einer Verfahren gemäß dem Oberbegriff des Anspruchs I erfindungsgemäß dadurch gelöst, daß während mindestens eines Reinigungsintervalles mindestens ein Bereich des Durchlasses vom Elektronenstrahl erhitzt wird, um auf dem Durchlaß abgelagerte Materialpartikel zwecks Reinigung des Durchlasses zu verdampfen.

Weitere Aufgabe der vorliegenden Erfindung ist es, eine z.B aus EP-B-108 376 bekannte Vorrichtung der einleitend genannen Art so zu verbessern, daß ein wartungsarmer Betrieb ermöglicht wird.

Diese Aufgabe wird in Verbindung mit einer Vorrichtung gemäß dem Oberbegriff des Anspruchs II erfindungsgemäß dadurch gelöst, daß der Durchlaß als Düse ausgebildet ist, die aus einem Düsenkanal und einem den Düsenkanal umgebenden Düsenmantel besteht, der Innendurchmesser des Düsenmantels so gewählt ist, daß der mittels der Fokussierung defokussierte Elektronenstrahl in einem Reinigungsintervall mindestens einen Teil des Düsenmantels beaufschlagt, der Düsenmantel im wesentlichen aus einer in der Wandung gehalterten Düsenbasis und einem die Wandung in Richtung auf die Vakuumkammer überkragenden Endsegmet besteht, das über die Verjüngung mit der Düsenbasis verbunden ist und die Verjüngung radial von einer Nut begrenzt wird.

Mit Hilfe dieses Verfahrens und dieser Vorrichtung ist es möglich, im Bereich des Durchlasses niedergeschlagene Materialpartikel erneut zu verdampfen und aus der Umgebung des Durchlasses zu entfernen. Das Reinigungsintervall kann in vorteilhafter Weise in ein Zeitintervall gelegt werden, in dem ein Wechsel des Gravurortes auf der Walze vorgenommen wird. Während dieses Wechsels ist der Elektronenstrahl defokussiert und kann auf der sich bewegenden Walze nicht zu Materialveränderungen führen. Im Bereich des ortsfesten Durchlasses kann durch einen geeignet defokussierten Elektronenstrahl jedoch ein erheblicher Temperaturanstieg erreicht werden, der eine Reinigung zur Folge hat. Durch die Anordnung der Düse im Bereich des Durchlasses ist darüber hinaus gewährleistet, daß neben einer leichten Auswechselbarkeit auch bei einer automatischen Selbstreinigung eine Lokalisierung des hohen Temperaturniveaus erfolgt. Darüber hinaus ist eine geeignete Materialauswahl für das Düsenmaterial möglich, um durch die Kombination eines speziellen Materials für die Wandung mit einem anderen speziellen Düsenmaterial optimale Beständigkeiten zu erzielen.

Durch die Verjüngung des Düsenmantels ist gewährleistet, daß das Düsenende auf eine vergleichsweise hohe Temperatur aufgeheizt werden kann, ohne daß eine unzulässige Temperaturerhöhung im restlichen Düsenbereich auftritt. Es ist hierdurch also möglich, insbesondere den Düsenbereich sehr stark zu erhitzen, der der Quelle der Dampfpartikel zugewandt und besonders stark von Aufsinterungseffekten betroffen ist. Durch die Überkragung der Düse wird ein unmittelbarer Kontakt des Endsegmentes mit der Wandung und damit ein unmittelbarer Temperaturübergang vermieden. Dieser Temperaturübergang würde zum einen die angestrebte starke Erhitzung des Endsegmentes beeinträchtigen, zum anderen würde ein zur Temperierung innerhalb der Wandung angeordneter Kühlmittelkreislauf unnötig belastet.

Weitere Einzelheiten der vorliegenden Erfindung ergeben sich aus der nachfolgenden ausführlichen Beschreibung und den beigefügten Zeichnungen, in denen bevorzugte Ausführungsformen der Erfindung beispielsweise veranschaulicht sind.

In den Zeichnungen zeigen:
- Fig. 1: : eine Prinzipdarstellung einer Vorrichtung zur Herstellung einer Oberflächenstruktur,
- Fig. 2:: eine Prinzipdarstellung der Strahlerzeugung,
- Fig. 3:: ein Blockschaltbild der Steuerung der Vorrichtung,
- Fig. 4:: ein Blockschaltbild der Linsenansteuerung,
- Fig. 5:: eine Prinzipdarstellung eines fokussierten Elektronenstrahles,
- Fig. 6:: eine Prinzipdarstellung eines defokussierten Elektronenstrahles, **und**
- Fig. 7:: eine teilweise Darstellung eines Schnittes durch eine Wandung, in deren Bereich eine die Wandung überkragende Düse angeordnet ist.

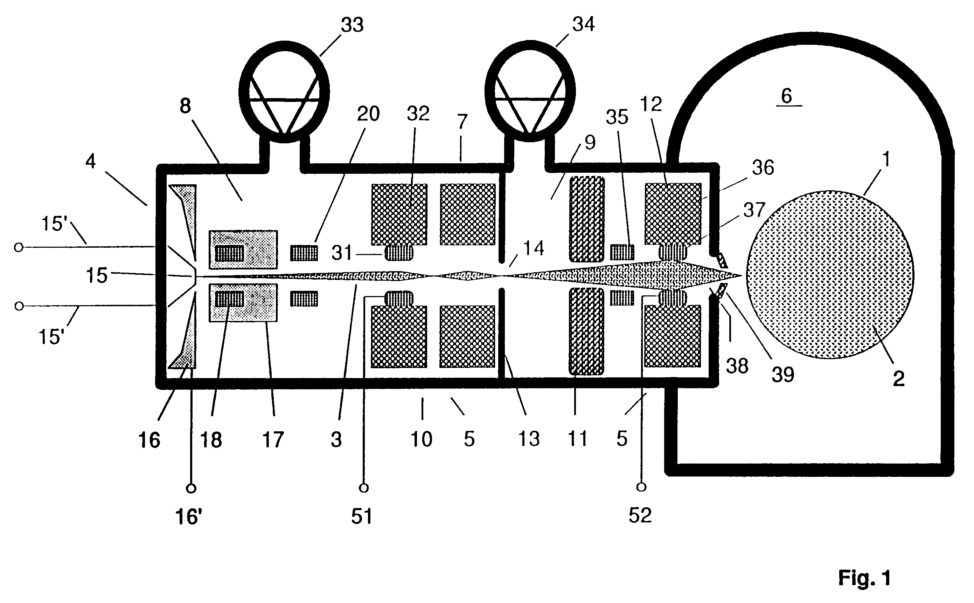

Eine in Figur 1 dargestellte Vorrichtung zur Herstellung einer Oberflächenstruktur im Bereich der Oberfläche (1) einer Walze (2) besteht im wesentlichen aus einem einen Elektronenstrahl (3) erzeugenden Strahlgenerator (4), einem Linsensystem (5) sowie einer die Walze (2) aufnehmenden Vakuumkammer (6). Der Strahlgenerator (4) und das Linsensystem (5) sind in einer Strahleinrichtung (7) angeordnet, die in eine Hauptkammer (8) und eine Zwischenkammer (9) unterteilt ist. In der Hauptkammer (8) sind der Strahlgenerator (4) sowie eine Brennweiteneinstellung (10) angeordnet, die ein Teil des Linsensystems (5) bildet. In der Zwischenkammer (9) sind im wesentlichen eine Wechselblende (11) sowie eine Fokussierung (12) angeordnet, die gemeinsam mit der Brennweiteneinstellung (10) die wesentlichen Elemente des Linsensystems (5) bilden. Die Hauptkammer (8) ist von der Zwischenkammer (9) durch eine Vakuumdrossel (13) getrennt, die eine im wesentlichen zentrisch angeordnete und den Durchtritt des Elektronenstrahles (3) zulassende Ausnehmung (14) aufweist. Durch die Vakuumdrossel (13) ist es möglich, in der Hauptkammer (8) und der Zwischenkammer (9) unterschiedliche Druckverhältnisse vorzusehen. So ist es beispielsweise möglich, in der Hauptkammer (8) einen Druck von etwa 8 x 0,00001 bar und in der Zwischenkammer (9) einen Druck von etwa 8 x 0,001 bar zu erzielen.

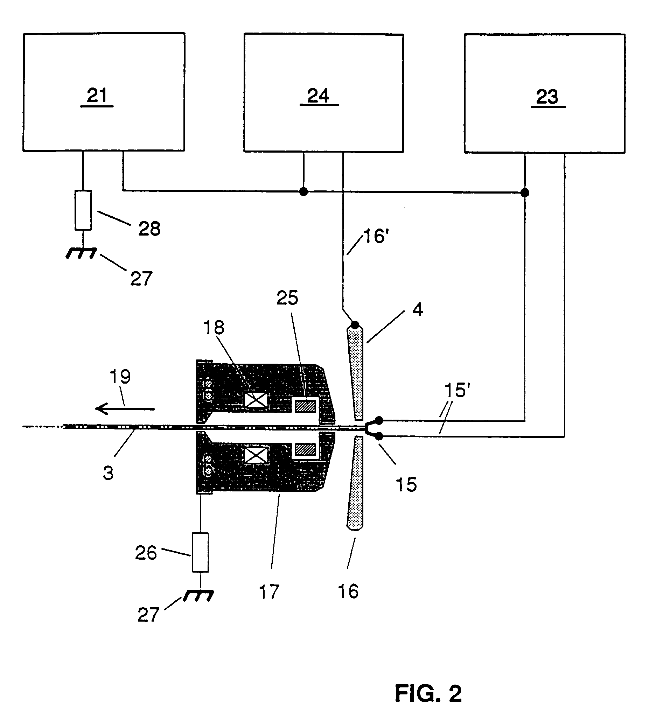

Der Strahlgenerator (4) besteht im wesentlichen aus einer Kathode (15), einem Wehneltzylinder (16) sowie einer Anode (17). Im Bereich der Anode (17) ist ein den Elektronenstrahl (3) ausrichtender Anodenzentrierer (18) angeordnet. In der Ausbreitungsrichtung (19) des Elektronenstrahles (3) ist hinter der Anode (17) ein Folgezentrierer (20) angeordnet, der gleichfalls die Ausrichtung des Elektronenstrahles (3) vornimmt und Streuverluste vermeidet. Die Kathode (15) ist über Leitungen (15') mit einer in Figur 2 dargestellten Hochspannungseinheit (21) verbunden, die eine Spannung bis zu etwa -50 Kilovolt generiert. Ein typischer Wert liegt bei etwa -35 Kilovolt. Bei einer derartigen Spannung können bei einer Einwirkungsdauer von etwa einer Mikrosekunde auf der Oberfläche (1) Ausnehmungen (22) mit einer typischen Tiefe von etwa 7 Mikrometern erzeugt werden. Bei einer Reduktion der Hochspannung auf etwa -25 Kilovolt beträgt die typische Tiefe der Ausnehmungen (22) etwa 3 bis 4 Mikrometer. Die Kathode (15) ist darüber hinaus mit einer in Figur 2 dargestellten Heizstromversorgung (23) verbunden. Der Wehneltzylinder (16) wird über eine Leitung (16') von einem Spannungsgenerator (24) gespeist, der gegenüber der an der Kathode (15) anliegenden Spannung ein Potential von etwa -1000 Volt erzeugt. Im Bereich der Anode (17) ist neben den den Anodenzentrierer (18) bildenden Zentrierspulen eine Ionensperre (25) vorgesehen, die im Bereich der Anode (17) auftretende Ionen aus dem Bereich des Elektronenstrahles (3) ableitet. Die Anode (17) ist über einen Widerstand (26) mit einem Masseanschluß (27) verbunden. Darüber hinaus ist auch die Hochspannungseinheit (21) über einen Widerstand (28) gegen Masse geschaltet. Als Material für die Kathode (15) sind insbesondere Wolframdrähte geeignet.

Die Brennweiteneinstellung (10) besteht aus einer ersten Zoom-Linse (29) und einer zweiten Zoom-Linse (30), die in Ausbreitungsrichtung (19) hintereinander angeordnet sind. Die erste Zoom-Linse (29) besteht aus einer dynamischen Linse (31) sowie einer statischen Linse (32). Die zweite Zoom-Linse (30) ist ohne eine dynamische Linse (31) ausgebildet. Das Vakuum in der Hauptkammer (8) wird von einer Vakuumpumpe (33) und das Vakuum in der Zwischenkammer (9) von einer Vakuumpumpe (34) aufrechterhalten. Insbesondere ist daran gedacht, die Pumpen (33,34) als Turbomolekularpumpen auszubilden. In der Zwischenkammer (9) ist zwischen der Wechselblende (11) und der Fokussierung (12) ein Zentrierer (35) vorgesehen, der Streuverluste des Elektronenstrahles (3) vermeidet. Die Fokussierung (12) besteht im wesentlichen aus einer statischen Linse (36) und einer dynamischen Linse (37). Sowohl die dynamische Linse (37) als auch die dynamische Linse (31) sind jeweils in der Nähe der dem Elektronenstrahl (3) zugewandten Innenflächen der statischen Linsen (32,36) angeordnet. Die Strahleinrichtung (7) weist im Bereich ihrer der Vakuumkammer (6) zugewandten Begrenzung eine Austrittsöffnung (38) auf, in deren Bereich eine Düse (39) angeordnet ist.

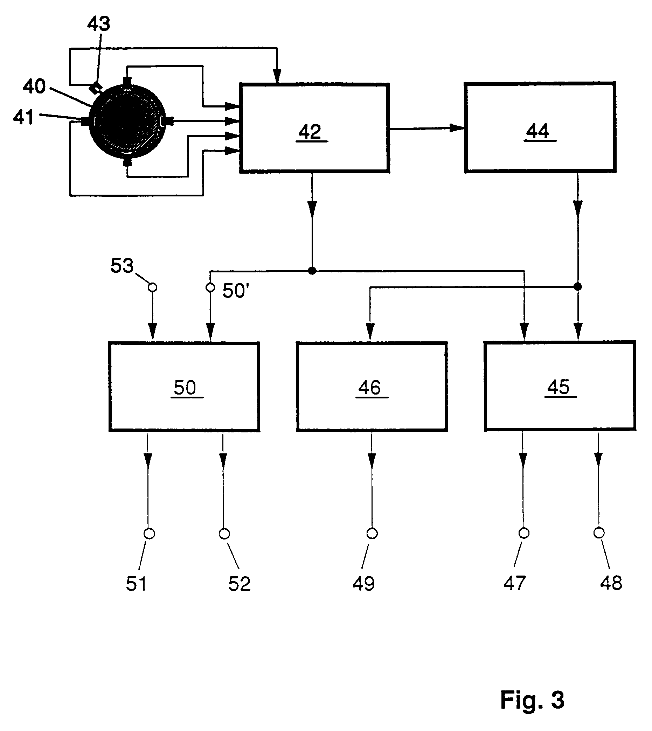

Zur Steuerung der reproduzierbaren Plazierung der Ausnehmungen (22) auf der Oberfläche (1) der Walze (2) ist eine in Figur 3 dargestellte Rasterscheibe (40) vorgesehen, die mit der Drehbewegung der Walze (2) synchronisiert und über Abnehmer (41) mit einer Auswertung (42) verbunden ist. Die Auswertung (42) stellt für nachfolgende Steuerelemente einen Takt zur Verfügung, der die exakte Erfassung der aktuellen Position der Walze (2) ermöglicht. Mit Hilfe einer Nullpunkterfassung (43) erfolgt die definierte Festlegung eines Bezugspunktes. Die Auswertung (42) ist mit einer Steuerung (44) verbunden, die beispielsweise als ein Phase-Locked-Loop-Schaltkreis ausgebildet sein kann. Die Steuerung (44) speist einen Sägezahngenerator (45) sowie eine Vorschubtakterzeugung (46). Der Sägezahngenerator (45) weist einen Gravursägezahn-Anschluß (47) sowie einen Vorschubsägezahn-Anschluß (48) auf. Die Vorschubtakterzeugung (46) ist mit einem Vorschubschrittmotor-Anschluß (49) versehen. Die Auswertung (42) ist mit dem Sägezahngenerator (45) über einen Steueranschluß (50') mit einer Linsenansteuerung (50) verbunden. Die Linsenansteuerung (50) weist einen Zoomlinsen-Anschluß (51), einen Schärfelinsen-Anschluß (52) und einen Steuereingang (53) auf.

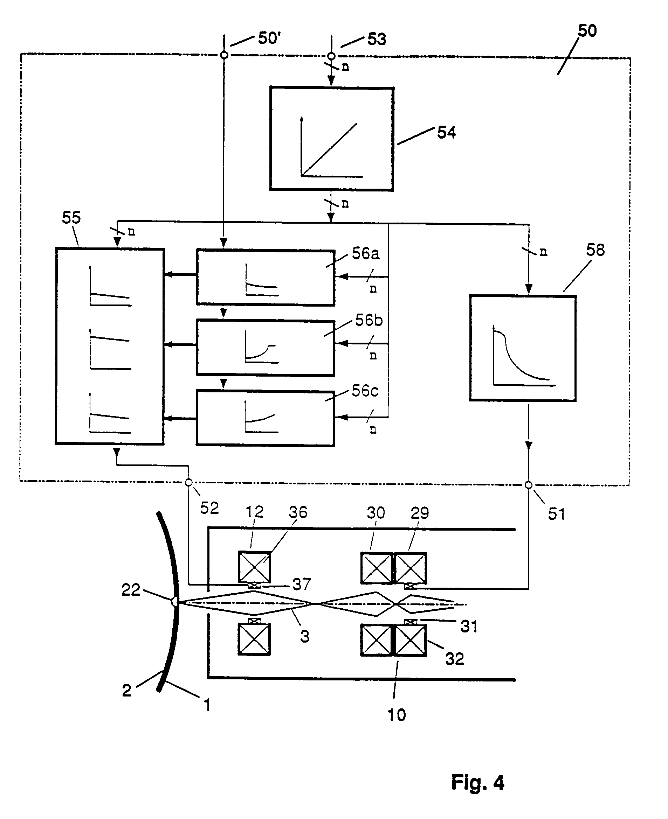

Zur Ansteuerung des Linsensystems (5) sind entsprechend Figur 4 mehrere Kennlinienglieder zur Signalformung vorgesehen, die die Linsenansteuerung (50) bilden. Über eine mit dem Steuereingang (53) verbundene Linearisierung (54) erfolgt die Ansteuerung eines Schärfegliedes (55), von Zeitgeberstufen (56a, 56b, 56c) sowie eines Zoom-Gliedes (58).

Das am Steuereingang (53) anliegende Steuersignal beeinflußt die Geometrie der zu erzeugenden Ausnehmungen (22). Die eingegebene Steuergröße wird im Schärfeglied (55) mittels Kennlinien in Einstellwerte für die Fokussierung (12) umgesetzt. Die Einstellwerte werden anschließend der dynamischen Linse (37) der Fokussierung (12) zugeführt. Die Kennlinie des Zoom-Gliedes (58) setzt die Steuergröße in entsprechende Einstellwerte für die Brennweiteneinstellung (10) um, die der dynamischen Linse (31) zugeführt werden.

Über eine Nachführung des Elektronenstrahls (3) kann eine Kompensation der Relativbewegung der Texturwalze (2) bezüglich der Düse (39) vorgenommen werden. Der Elektronenstrahl (3) bleibt hierdurch exakt auf ein vorgewähltes Gebiet ausgerichtet und führt zur Ausbildung sehr symmetrischer Ausnehmungen (22).

Aufgrund der sehr kurzen Zeitverzögerungen bei der Ansteuerung des Linsensystems (5) können etwa 150.000 Ausnehmungen (22) je Sekunde hergestellt werden. Bei Verwendung schneller Steuervorrichtungen ist es auch möglich, Taktfrequenzen für die Erzeugung von 300.000 bis 600.000 Ausnehmungen pro Sekunde zu realisieren. Um diese Taktfrequenzen zu erreichen wird die Walze (2) mit etwa 10 Umdrehungen pro Sekunde gedreht und mit einer entsprechenden Geschwindigkeit axial bewegt. Bei einer Zeitspanne von etwa 16 Mikrosekunden zur Erzeugung einer Ausnehmung (22) kann eine komplette Walze (2) innerhalb von etwa 45 Minuten bearbeitet werden. Die Energieaufnahme durch die Walze (2) beträgt in dieser Zeit lediglich etwa 500 Watt. Unerwünschte Veränderungen im Bereich der Oberfläche (1) durch thermische Verspannungen oder ähnliche Vorgänge sind somit mit hoher Wahrscheinlichkeit ausgeschlossen.

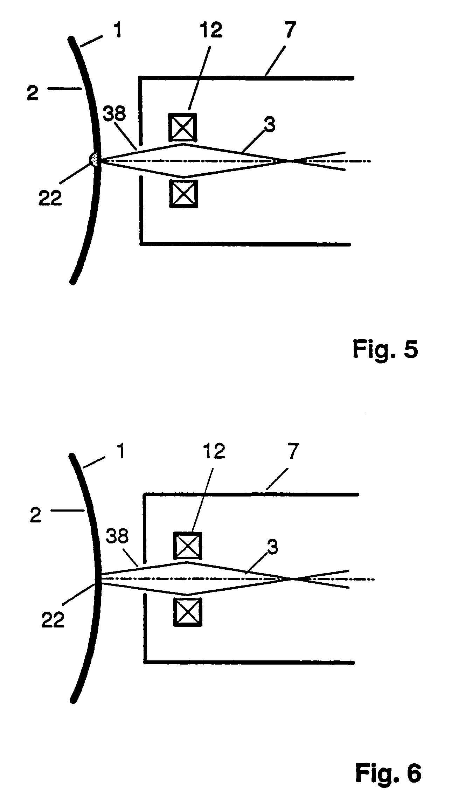

In Figur 5 ist der zur Erzeugung einer Ausnehmung (22) fokussierte Elektronenstrahl (3) dargestellt. In diesem Fokussierungszustand weist der Elektronenstrahl (3) auf der Oberfläche (1) eine hohe Energiedichte auf. In Figur 6 ist der Elektronenstrahl (3) defokussiert dargestellt und aufgrund der gegenüber der Fokussierung nach Figur 5 geringeren Energiedichte nicht im Stande, strukturelle Veränderungen im Bereich der Oberfläche (1) während der Durchführung einer Bewegung zu verursachen. Dieser defokussierte Zustand des Elektronenstrahles (3) ermöglicht es, während der Weiterbewegung der Walze (2) eine Positionsveränderung des Elektronenstrahles (3) relativ zur Oberfläche (1) vorzunehmen, ohne den jeweils zwischen zwei zu erzeugenden Ausnehmungen (22) vorhandenen Oberflächenbereich zu beschädigen.

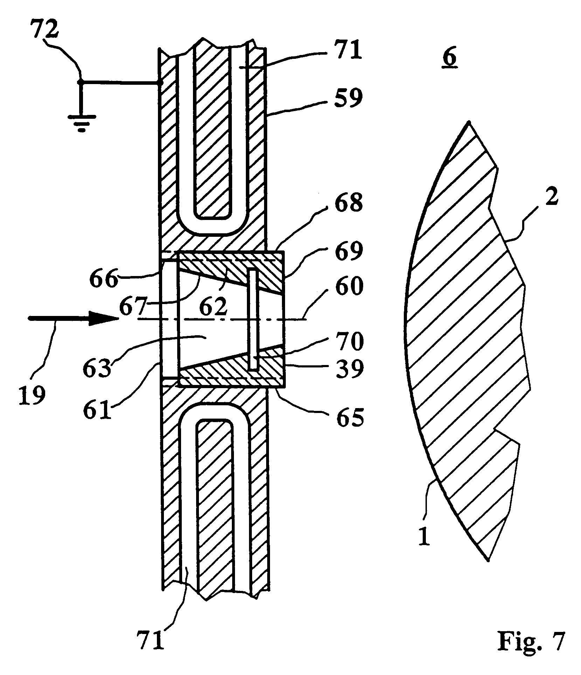

In Figur 7 ist ein vergrößerter Querschnitt durch eine die Strahleinrichtung (7) von der Vakuumkammer (6) trennende Wandung (59) dargestellt. In der Wandung (59) ist die Düse (39) angeordnet, die sich sich mit ihrer Längsachse (60) in Ausbreitungsrichtung (19) des Elektronenstrahles (3) erstreckt. Die Düse (39) ist innerhalb eines Durchlasses (61) der Wandung (59) angeordnet, der bereichsweise die Austrittsöffnung (38) bildet. Die Düse (39) besteht im wesentlichen aus einem Düsenmantel (62), der einen Düsenkanal (63) im wesentlichen zentrisch umschließt. Der Düsenkanal (63) verjüngt sich in Richtung auf die Vakuumkammer (6). Im Bereich einer äußeren Begrenzung (64) ist die Düse (39) im wesentlichen zylindrisch ausgebildet und greift mit einem Außengewinde (65) in ein Innengewinde (66) der Wandung (59) ein.

Der Düsenmantel (62) besteht im wesentlichen aus einer abgewandt zur Vakuumkammer (6) angeordneten Düsenbasis (67), die über eine Verjüngung (68) in ein der Vakuumkammer (6) zugewandt angeordnetes Endsegment (69) übergeleitet ist. Die Verjüngung (68) ist bezüglich der Längsachse (60) radial von einer Nut (70) begrenzt. Statt der in Figur 7 dargestellten Innennut ist es auch möglich, die Nut (70) als Außennut auszubilden. Mit dem Endsegment (69) überkragt die Düse (39) die Wandung (59) in Richtung auf die Vakuumkammer (6). Innerhalb der Wandung (59) sind Kühlmittelleitungen (71) angeordnet, in denen zur Vermeidung einer unerwünschten Aufheizung ein Kühlmittel zirkuliert.

Die Düse (39) besteht zur Gewährleistung einer hohen Temperaturbeständigkeit vorzugsweise aus einem belastungsfähigen Material, beispielsweise aus Stahl oder Tantal. Insbesondere bei Tantal ist eine sehr gute Dauerbeständigkeit gegeben. Zur Vermeidung von statischen Aufladungen ist die Wandung (59) mit einem Ableitungsanschluß (72) verbunden. Insbesondere ist daran gedacht, den Ableitungsanschluß (72) zu erden. Durch die Verbindung mit dem Ableitungsanschluß (72) wird insbesondere auch bei Beaufschlagung der Düse (39) mit dem defokussierten Elektronenstrahl eine statische Aufladung der Düse (39) und damit eine unerwünschte Ablenkung der Elektronen vermieden.

Beim Betrieb der Strahleinrichtung (7) zur Erzeugung einer Oberflächenstruktur auf der Walze (2) wird der Elektronenstrahl (3) durch die Düse (39) hindurch in Richtung auf die Walze (2) geleitet und derart fokussiert, daß auf der Walzenoberfläche (2) eine gegebenenfalls vom einem Kraterwall umgebene Ausnehmung erzeugt wird. In diesem fokussierten Zustand wird der Elektronenstrahl (3) von der Fokussierung (12) derart gebündelt, daß mit Ausnahme einer geringen Zahl von Streuelektronen keine Beaufschlagung der Düse (39) stattfindet. Nach einer ausreichenden Einwirkungszeit des Elektronenstrahles (3) auf die Walze (2), während der der Elektronenstrahl (3) gegebenenfalls zur Erzeugung einer scharfen Konturierung der Rotationsbewegung der Walze (2) nachgeführt wird, erfolgt die Positionierung der Mittellinie des Elektronenstrahles (3) auf einem anderen Ort der Oberfläche (1), in dem eine weitere Ausnehmung zu erzeugen ist. Während der Änderung dieser Positionierung wird der Elektronenstrahl (3) mit Hilfe der Fokussierung (12) derart defokussiert, daß im Bereich der sich bewegenden Walze (2) keine Materialveränderungen stattfinden. Die Defokussierung des Elektronenstrahles (3) erfolgtderart, daß ein vorgebbarer Randbereich des Elektronenstrahles (3) auf den Düsenmantel (62) auftrifft. Insbesondere ist es möglich, die Defokussierung derart vorzugeben, daß ein Auftreffen von Elektronen im wesentlichen im Bereich des Endsegmentes (69) erfolgt. Durch die auftreffenden Elektronen erfährt das Endsegment (69) eine erhebliche Erwärmung, die zu einem Glühen führt. Durch diesen Glühvorgang, der in Abhängigkeit von der zum Wechsel eines Gravurortes auf der Walze (2) erforderlichen Zeitspanne etwa fünfzehn Mikrosekunden dauert, wird infolge der hohen Temperatur ein Niederschlag von Materialpartikeln vermieden und bereits aufgesinterte Materialpartikel werden verdampft. Durch die Kombination der Verjüngung (68) mit der Nut (70) wird die Ableitung von Wärmeenergie aus dem Bereich des Endsegmentes (69) in den Bereich der Düsenbasis (67) und damit die aus dem Wärmeübergang zur Wandung (59) resultierende Abkühlung wesentlich vermindert. Zur Erzeugung einer weiteren Gravur auf der Oberfläche (1) der Walze (2) erfolgt eine erneute Fokussierung des Elektronenstrahles (3) im Anschluß an die Defokussierungsphase. Es wird somit zyklisch zwischen Gravur- und Reinigungsphasen gewechselt.

## Patentansprüche

1. Verfahren zum wartungsfreien Betrieb einer Vorrichtung zum Erzeugen von Oberflächenstrukturen auf einer Walze mittels eines Elektronenstrahles, bei dem der Elektronenstrahl (3) zur Veränderung seiner Bündelung von einer Fokussierung beaufschlagt wird und bei dem die Vorrichtung aus einer Vakuumkammer (6) zur Aufnahme der Walze (2) sowie aus einer den Elektronenstrahl (3) erzeugenden Strahleinrichtung (7) besteht, welche in einer die Strahleinrichtung (7) von der Vakuumkammer (6) trennenden Wandung (59) einen Durchlaß (61) für den Elektronenstrahl (3) aufweist, **dadurch gekennzeichnet,** daß während mindestens eines Reinigungsintervalles mindestens ein Bereich des Durchlasses (61) vom Elektronenstrahl (3) erhitzt wird, um auf dem Durchlaß (61) abgelagerte Materialpartikel zwecks Reinigung des Durchlasses (61) zu verdampfen.

2. Verfahren nach Anspruch 1, **dadurch gekennzeichnet,** daß der Elekronenstrahl (3) während des Reinigungsintervalles relativ zur Walze (2) defokussiert wird.

3. Verfahren nach Anspruch 1 oder 2, **dadurch gekennzeichnet,** daß während des Reinigungsintervalles mindestens ein Bereich des Durchlasses (61) geglüht wird.

4. Verfahren nach Anspruch 3, **dadurch gekennzeichnet,** daß während des Reinigungsintervalles mindestens ein Bereich einer den Durchlaß (61) bildenden Düse (39) geglüht wird.

5. Verfahren nach Anspruch 4, **dadurch gekennzeichnet,** daß im wesentlichen ein in Richtung auf die Walze (2) angeordnetes Endsegment (69) der Düse (39) geglüht wird.

6. Verfahren nach einem der Ansprüche 1 bis 5, **dadurch gekennzeichnet,** daß die Erwärmung des Durchlasses (61) in den Reinigungsintervallen zyklisch durchgeführt wird.

7. Verfahren nach Anspruch 6, **dadurch gekennzeichnet,** daß das Reinigungsintervall jeweils innerhalb des Zeitraumes liegt, der für den Positionswechsel des Elektronenstrahles (3) von einem zum anderen Beaufschlagungsort auf der Walze (29) benötigt wird.

8. Verfahren nach einem der Ansprüche 1 bis 7, **dadurch gekennzeichnet,** daß die den Durchlaß (61) bildende Düse (39) im Bereich einer Düsenbasis (67) während des Reinigungsintervalles über einen Wärmekontakt mit der Wandung (59) gekühlt wird.

9. Verfahren nach einem der Ansprüche 1 bis 8, **dadurch gekennzeichnet,** daß für das Reinigungsintervall ein Zeitraum von etwa fünf bis 20 Mikrosekunden vorgesehen wird.

10. Verfahren nach einem der Ansprüche 1 bis 9, **dadurch gekennzeichnet,** daß die den Durchlaß (61) bildende Düse (39) zur Vermeidung von elektrostatischen Aufladungen elektrisch mit einem Ableitungsanschluß (72) verbunden ist.

11. Vorrichtung zur Durchführung des Verfahrens nach Anspruch 1, die aus einer Strahleinrichtung (7) mit einem den Elektronenstrahl (3) erzeugenden Strahlgenerator (4), einer Brennweiteneinstellung (10) sowie mit einer Fokussierung (12) und aus einer die Walze (2) aufnehmenden Vakuumkammer (6) besteht, wobei die Strahleinrichtung (7) in einer diese von der Vakuumkammer (6) trennen den Wandung (59) einen Durchlaß (61) für den Elektronenstrahl (39) aufweist, **dadurch gekennzeichnet,** daß
- der Durchlaß (61) als Düse (39) ausgebildet ist, die aus einem Düsenkanal (63) und einem den Düsenkanal (63) umgebenden Düsenmantel (62) besteht,
- der Innendurchmesser des Düsenmantels (62) so gewählt ist, daß der mittels der Fokussierung (12) defokussierte Elektronenstrahl (3) in einem Reinigungsintervall mindestens einen Teil des Düsenmantels beaufschlagt,
- der Düsenmantel (62) im wesentlichen aus einer in der Wandung (59) gehalterten Düsenbasis (67) und einem die Wandung (59) in Richtung auf die Vakuumkammer (6) überkragenden Endsegmet (69) besteht, das über eine Verjüngung (68) mit der Düsenbasis (67) verbunden ist **und**
- die Verjüngung (68) radial von einer Nut (70) begrenzt wird.

12. Vorrichtung nach Anspruch 10, **dadurch gekennzeichnet,** daß die Düse (39) mindestens bereichsweise aus Tantal besteht.

13. Vorrichtung nach Anspruch 11 oder 12, **dadurch gekennnzeichnet,** daß die Düse (39) mindestens bereichsweise aus Stahl besteht.

14. Vorrichtung nach einem der Ansprüche 10 bis 13, **dadurch gekennzeichnet,** daß die Düse (39) einen Wärmeübergang zulassend in die Wandung (59) eingesetzt ist und daß die Wandung (59) mindestens eine Kühlmittelleitung (71) aufweist.

## Claims

1. Method for the free-maintenance operation of an apparatus for producing surface structures' on a roller with an electron beam, wherein the electron beam (3) is charged by a focusing adjustment for varying its bundling and wherein the apparatus comprises a vacuum chamber (6) for acceptance of the roller (2) as well as a beam equipment (7) that generates the electron beam (3), said beam equipment comprising a passage (61) for the electron beam (3) in a wall (59) that separates the beam equipment (7) from the vacuum chamber (6), characterized in that during at least one cleaning interval at least one region of the passage (61) is heating by the electron beam (3) to evaporate material particles deposited on the passage (61) for the purpose of cleaning the passage (61).

2. Method according to claim 1, characterized in that the electron beam (3) is defocused relative to the roller (2) during the cleaning interval.

3. Method according to claim 1 or 2, characterized in that at least one region of the passage (61) is rendered incandescent during the cleaning interval.

4. Method according to claim 3, characterized in that at least one region of a nozzle (39) forming the passage (61) is rendered incandescent during the cleaning interval.

5. Method according to claim 4, characterized in that an end segment (69) of the nozzle (39) arranged in the direction toward the roller (2) essentially is rendered incandescent.

6. Method according to any one of the claims 1 to 5, characterized in that the heating of the passage (61) is cyclically implemented in the cleaning intervals.

7. Method according to claim 6, characterized in that the cleaning interval respectively lies within the time span that is required for the change in position of the electron beam (3) from one charging location to another charging location on the roller (2).

8. Method according to any one of the claims 1 to 7, characterized in that the nozzle (39) forming the passage (61) is cooled in the region of a nozzle base (67) during the cleaning interval, the nozzle being cooled via a thermal contact with the wall (59).

9. Method according to any one of the claims 1 to 8, characterized in that a time span of approximately 5 to 20 microseconds is provided for the cleaning interval.

10. Method according to any one of the claims 1 to 9, charaterized in that the nozzle (39) forming the passage (61) is electrically connected to a discharge terminal (72) in order to avoid electrostatic charging.

11. Apparatus for the implementation of the method according to claim 1, comprising a beam equipment (7) having a beam generator (4) that generates the electron beam (3), a focal length adjustment (10), a focusing adjustment (12) and a vacuum chamber (6) which accepts the roller (2), the beam equipment (7) comprising a passage (61) for the electron beam (39) in a wall (59) that separates the beam equipment (7) from the vacuum chamber (6), characterized in that:
- the passage (61) is fashioned as a nozzle (39) having a nozzle channel (63) and a nozzle jacket (62) that surrounds the nozzle channel (63),
- the inside diameter of the nozzle jacket (62) is selected such that the electron beam (3) defocused with the focusing adjustment (12) charges at least a part of the nozzle jacket (62) in a cleaning interval,
- the nozzle jacket (62) comprising essentially a nozzle base (67) secured in the wall (59) and an end segment (69) that projects beyond the wall (59) in a direction toward the vacuum chamber (6), and a taper (68) connecting said end segment (69) to the nozzle base (67), the taper (68) being radially limited by a channel (70).

12. Apparatus according to claim 10, characterised in that at least regions of the nozzle (39) are composed of tantalum.

13. Apparatus according to claim 11 or 12, characterized in that at least regions of the nozzle (39) are made of steel.

14. Apparatus according any one of the claims 10 to 13, characterized in that the nozzle (39) is introduced into the wall (59) providing a thermal transmission, and the wall (59) comprises at least one coolant line (71).

## Revendications

1. Procédé de fonctionnement sans entretien d'un dispositif de production de textures superficielles sur un cylindre avec un faisceau électronique, dans lequel le faisceau électronique (3) est sollicité pour modifier sa concentration par un dispositif de focalication et dans lequel le dispositif est constitué d'une chambre à vide (6) pour recevoir le cylindre (2) ainsi que d'un dispositif de rayonnement (7) produisant un faisceau électronique (3), qui présente dans une paroi (59) séparant le dispositif de rayonnement (7) de la chambre à vide (6) un passage (61) pour le faisceau électronique (3), caractérisé en ce qu'au moins pendant un intervalle de nettoyage, au moins une zone du passage (61) est chauffée par le faisceau électronique (3) pour vaporiser les particules de matière déposées sur le passage (61) en vue de nettoyer celui-ci.

2. Procédé selon la revendication 1, caractérisé en ce que le faisceau (3) est défocalisé par rapport au cylindre (2) au cours de l'intervalle de nettoyage.

3. Procédé selon la revendication 1 ou 2, caractérisé en ce que, pendant l'intervalle de nettoyage, au moins une zone du passage (61) est soumise à incandescence.

4. Procédé selon la revendication 3, caractérisé en ce que, pendant l'intervalle de nettoyage, au moins une zone d'une buse (39) formant le passage (61) est soumise à incandescence.

5. Procédé selon la revendication 4, caractérisé en ce qu'en substance, un segment terminal (69) de la buse (39) agencé dans la direction du cylindre (2) est soumis à incandescence.

6. Procédé selon l'une quelconque des revendications 1 à 5, caractérisé en ce que le chauffage du passage (61) est réalisé de manière cyclique dans les intervalles de nettoyage.

7. Procédé selon la revendication 6, caractérisé en ce que l'intervalle de nettoyage se situe respectivement dans la période de temps nécessaire pour changer de position le faisceau électronique (3) d'un emplacement de bombardement à un autre sur le cylindre (29).

8. Procédé selon l'une quelconque des revendications 1 à 7, caractérisé en ce que la buse (39) formant le passage (61) est refroidie dans la zone d'une base (67) de la buse au cours de l'intervalle de nettoyage par un contact thermique avec la paroi (59).

9. Procédé selon l'une quelconque des revendications 1 à 8, caractérisé en ce qu'il est prévu pour l'intervalle de nettoyage un intervalle de temps d'environ 5 à 20 microsecondes.

10. Procédé selon l'une quelconque des revendications 1 à 9, caractérisé en ce que la buse (39) formant le passage (61) est raccordée électriquement à une borne de dérivation (72) pour éviter des charges électrostatiques.

11. Dispositif de réalisation du procédé selon la revendication 1, qui est constitué d'un dispositif de rayonnement (7) avec un générateur de faisceau (4) produisant le faisceau électronique (3), d'un dispositif de réglage du foyer (10) ainsi que d'un dispositif de focalisation (12) et d'une chambre à vide (6) recevant le cylindre (2), dans lequel le dispositif de rayonnement (7) présente dans une paroi (59) le séparant de la chambre à vide (6) un passage (61) pour le faisceau électronique (39), caractérisé en ce que :
- le passage (61) se présente sous la forme d'une buse (39), qui est constituée d'un canal (63) et d'une gaine (62) entourant le canal (63),
- le diamètre interne de la gaine (62) de la buse est sélectionné de telle sorte que le faisceau électronique (3) défocalisé à l'aide du système de focalisation (12) bombarde dans un intervalle de nettoyage au moins une partie de la gaine de la buse,
- la gaine (62) de la buse est constituée en substance d'une base (67) supportée dans la paroi (59) et d'un segment terminal (69) agencé en porte-à-faux sur la paroi (59) dans la direction de la chambre à vide (6), segment terminal qui est raccordé via une partie conique (68) à la base (67) de la buse, et la partie conique (68) est limitée radialement par une rainure (70).

12. Dispositif selon la revendication 10, caractérisé en ce que la buse (39) est constituée au moins par zones de tantale.

13. Dispositif selon la revendication 11 ou 12, caractérisé en ce que la buse (39) est constituée au moins par zones d'acier.

14. Dispositif selon l'une quelconque des revendications 10 à 13, caractérisé en ce que la buse (39) est mise en place de manière à autoriser une transition thermique dans la paroi (59) et la paroi (59) présente au moins une conduite de réfrigérant (71).
